(19) Europäisches Patentamt

European Patent Office

Office européen des brevets

(11) EP 1 726 838 A2

(12) EUROPEAN PATENT APPLICATION

(43) Date of publication:
29.11.2006 Bulletin 2006/48

(51) Int Cl.:
F16C 33/64 (2006.01)  F16C 33/62 (2006.01)
F16C 33/20 (2006.01)

(21) Application number: 06010932.9

(22) Date of filing: 26.05.2006

(84) Designated Contracting States:
AT BE BG CH CY CZ DE DK EE ES FI FR GB GR
HU IE IS IT LI LT LU LV MC NL PL PT RO SE SI
SK TR
Designated Extension States:
AL BA HR MK YU

(30) Priority: 26.05.2005 JP 2005153691

(71) Applicant: JTEKT Corporation
Chuo-ku,
Osaka-shi
Osaka 542-8502 (JP)

(72) Inventors:
• Wasede, Yoshitaka
JTEKT CORPORATION
Osaka-shi
Osaka 542-8502 (JP)
• Ochi, Shinya
JTEKT CORPORATION
Osaka-shi
Osaka 542-8502 (JP)

(74) Representative: Schaeberle, Steffen
Hoefer & Partner,
Patentanwälte,
Gabriel-Max-Strasse 29
81545 München (DE)

(54) **Rolling/sliding part, rolling bearing, cam follower, and method of modifiying the surface of the rolling/sliding part**

(57) The invention provides a cam follower having an outer ring which is used in a state where the cam follower comes into sliding contact or rolling contact with a mating part-The outer ring is configured such that the hardness of a surface layer portion existing between the surface and at least 3 $\mu$m below the surface is Hv 780 to 900, and the hardness of an internal surface portion existing at a depth of 10 $\mu$m or more from the surface is lower than the hardness of the surface layer portion and less than Hv 780. Such hardness can be obtained by performing soft shot blasting or flow barrel processing on a surface layer portion of a base material to be the outer ring.

FIG. 1

EP 1 726 838 A2

**Description**

BACKGROUND OF THE INVENTION

The present invention relates to a rolling/sliding part (hereinafter referred to as rolling/sliding part) which is used in a state where the rolling/sliding part comes into sliding contact or rolling contact with a mating part, a rolling bearing, a cam follower, and the like.

In a bearing ring and bearing elements which constitute a bearing or an outer ring which constitutes a cam follower, their surfaces are often peeled (also referred to as "peeling damage." In order to prevent this peeling, a method of increasing the hardness of surface layer portions of those parts or a method of applying residual compressive stress to the surface layer portions is already known (for example, Patent Documents 1 to 5).

Patent Document 1: Japanese Unexamined Patent Application Publication No. 5-288257 Patent
Document 2: Japanese Unexamined Patent Application Publication No. 5-288221
Patent Document 3: Japanese Unexamined Patent Application Publication No. 6-129433
Patent Document 4: Japanese Unexamined Patent Application Publication No. 6-129434
Patent Document 5: Japanese Unexamined Patent Application Publication No. 6-42537

However, hardening processing such as shot peening should be performed on the surface with a lot of collision energy to raise the hardness of a surface layer portion existing between a surface thereof and a depth of about 50 $\mu$m from the surface of a part. Since this hard processing makes the surface of the part rough which becomes a primary factor which causes premature pitching in a contacting mating member, superfinishing for roughness fining is required after the surface modification. Further, there is also a possibility that the hard shot peening generates minute cracks in the surface layer portion. This also requires superfinishing for roughness fining after the surface modification, which results in cost-up.

SUMMARY OF THE INVENTION

The present invention has been made to cope with the above problems. Therefore, an object of the invention is to obtain a low-cost rolling/sliding part which is hardly peeled and has little probability that causes pitching in a mating member. Further, another object of the invention is to obtain a rolling bearing and a cam follower with employing such a rolling/sliding part.

A rolling/sliding part of the present invention is a rolling/sliding part which is used in a state where the rolling/ sliding part comes into sliding contact or rolling contact with a mating part. The hardness of a surface layer portion existing from a surface thereof to at least 3 $\mu$m (to about 5 $\mu$m at a maximum) below the surface is Hv 780 to 900, and the hardness of an internal surface portion existing at a depth of 10 $\mu$m or more from the surface is lower than the hardness of the surface layer portion and less than Hv 780. Further, it is preferable that the hardness of the internal surface portion existing at a depth of 10 $\mu$m or more from the surface be Hv 60 or more lower than the hardness of the surface layer portion.

Further, it is preferable that the maximum compressive residual stress of the surface layer portion be 800 Mpa or more and the maximum compressive residual stress of the internal layer portion be 300 Mpa or less.

Further, it is preferable that the roughness Ra of the surface of the surface layer portion be 0.15 $\mu$ or less.

A rolling bearing of the present invention is a cam follower having a rotatable outer ring which comes into rolling contact with a cam. One of the rolling/sliding parts constitutes both the bearing ring and the rolling elements.

Further, a cam follower of the present invention is a cam follower having a rotatable outer ring which comes into rolling contact with a cam. One of the above rolling/sliding parts constitutes the outer ring.

A surface modificating method of a rolling/sliding part of the present invention is a surface modificating method of a rolling/sliding part which is used in a state where the rolling/sliding part comes into sliding contact or rolling contact with a mating part. The method includes performing shot-blasting or barrel processing which has an effect on the hardness of only a surface layer portion existing at a depth of, at a maximum, 10 $\mu$m from the surface of a base material to be the rolling/sliding part, and repeating the processing until it is confirmed that, when vickers hardness measurement is performed on the base material after the processing, the hardness A measured under a load of 0.1 N becomes Hv 780 to 900, and the hardness B measured under a load of 1 N becomes lower than the hardness A and less than Hv 780.

According to the rolling/sliding part of the present invention, it is possible to prevent most of peeling that is surface peeling. Moreover, since the rolling/sliding part of the present invention only needs an improvement in the hardness of only a surface layer portion existing between a surface thereof and a depth of 3 $\mu$m (a depth of 5 $\mu$m at a maximum) from the surface, occurrence of cracks in the rolling/sliding part itself or occurrence of premature pitching to a contacting mating member can be prevented only with processing by soft shot-blasting or flow barrel processing. Moreover, processing for roughness removal such as superfinishing becomes unnecessary, which contributes to a low cost.

By the surface modificating method of a rolling/sliding part of the present invention, measurement of the hardness of a modified surface becomes easy, and the processing efficiency of the surface modificating when a rolling/sliding part is manufactured can be improved.

BRIEF DESCRIPTION OF THE DRAWINGS

Fig. 1 is a sectional view of a cam follower according to Embodiment 1 of the present invention.
Fig. 2 is a partial sectional view of a roller bearing according to Embodiment 2 of the present invention.
Fig. 3 is an explanatory view of a Vickers hardness measuring method.

DETAILED DESCRIPTION OF PREFERRED EMBODIMENTS

Next, a specific example of a rolling/sliding part according to the present invention will be described by the following embodiments.

Embodiment 1

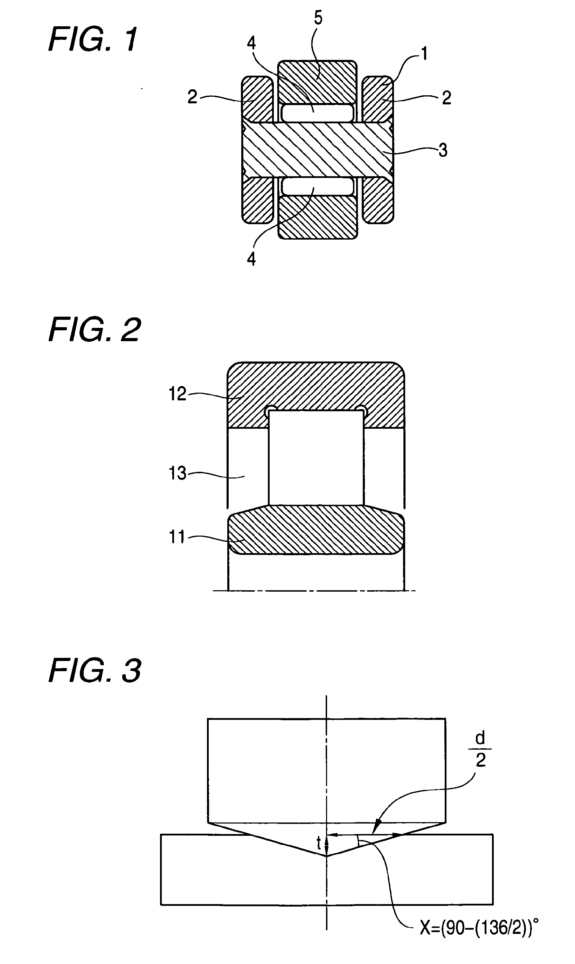

Fig. 1 is a sectional view of a cam follower according to Embodiment 1 of the present invention. In this cam follower, both ends of a shaft 3 is fixedly supported by a pair of support walls 2 and 2 which are provided with spacing between them at ends of the locker arm 1 which face a cam (not shown), a short cylindrical outer ring 5 is provided around the shaft 3 with rollers 4 and 4 disposed between the outer ring and the shaft, and the outside cylindrical surface of the outer ring 5 and the outside cylindrical surface of the cam is caused to abut on each other so that the outer ring 5 rotates about the shaft 3 with the rotation of the cam. Accordingly, the outer ring 5 corresponds to a rolling/sliding part of the present invention.

Now, considering that peeling occurring in the outside cylindrical surface of the outer ring 5 is surface peeling which is generated in a surface layer portion up to about 5 $\mu$m from a surface layer, the present inventors paid attention to improving the hardness of only the surface layer portion existing between a surface and a depth of at least 3 $\mu$m to about 5 $\mu$m at a maximum from the surface. The inventors performed on the outer ring 5, which is made of bearing steel JIS SUJ2 as a material, soft shot-blasting or flow barrel processing to improve the hardness of only the surface layer portion existing between the surface and a depth of about 3 $\mu$m to 5 $\mu$m from the surface, thereby carrying out modificating on the surface of the outer ring by pressing hardening.

Next, an outer ring 5 (conventional product) on which the surface modificating was not performed and three types of outer rings 5 on which the surface modificating was performed by the above processing method were prepared. Then, evaluation of an anti-peeling property and evaluation of pitching to a mating member (mating member damage evaluation) were performed on these outer rings. The conditions and results of these evaluations are shown in Tables 1, 2, and 3.

Table 1

| Radial Load | 2 kN |
|---|---|
| Rotational Speed of Outer Ring | 5000 r/min |
| Lubricating Oil | OW-20 |
| Lubricating Method | From Top of Outer Ring |
| Temperature of Lubricating Oil | 120°C |
| Amount of Oil Supplied | 100 ml/min |
| Driving Ring | SUJ2 quenching (through hardening) $\phi$47.5 Disc HRC60$\uparrow$ 3.2 |
| Test Time | 50 hr |

Table 2

|  | Hardness 3 μm below Surface | Hardness 5 μm below Surface | Hardness 10 μm below Surface | Internal Hardness | Ra | Anti-peeling Property Evaluation Result |
|---|---|---|---|---|---|---|
| Conventional Product 1 (Non-modificated Product) | 750 | 750 | 750 | 750 | 0.15 | X |
| modificated Product 1 of Present Invention | 810 | 780 | 750 | 750 | 0.1 | O |
| modificated Product 2 of Present Invention | 830 | 780 | 750 | 750 | 0.1 | O |
| modificated Product 3 of Present Invention | 880 | 840 | 780 | 750 | 0.15 | O |
| (O ··· No Problem, X ··· with Problem) | | | | | | |

Table 3

| Radial Load | 2 kN |
|---|---|
| Rotational Speed of Outer Ring | 5000 r/min |
| Lubricating Oil | OW-20 |
| Lubricating Method | From Top of Outer ring |
| Temperature of Lubricating Oil | 120°C |
| Amount of Oil Supplied | 100 ml/min |
| Driving Ring | S55C quenching (through hardening) φ47.5 Disc<br>HRC40↑ lz |
| Test Time . | 50 hr |

Table 4

|  | Hardness 3 μm below Surface | Hardness 5 μm below Surface | Hardness 10 μm below Surface | Ra | Evaluation Result of Pitching to Mating Member |
|---|---|---|---|---|---|
| Conventional Product 1 (Non-modificated Product) | 750 | 750 | 750 | 0.15 | O |
| modificated Product 1 of Present Invention | 810 | 750 | 750 | 0.1 | O |
| modificated Product 2 of Present Invention | 830 | 750 | 750 | 0.1 | O |
| modificated Product 3 of Present Invention | 880 | 780 | 770 | 0.15 | O |
| (O ··· No Problem) | | | | | |

As can be seen from Table 2, peeling occurred in Conventional Product 1 (hardness Hv 750 of (3 μm below the surface) a surface layer portion, hardness Hv 750 below 10 μm below the surface, internal hardness Hv 750 50 μm below the surface, and surface roughness Ra 0.15). However, in cases of Modificated Products 1 to 3, problematic peeling did not occur. It is considered that this is caused by the existence or nonexistence of a hardness increase in the surface layer portion of the outer ring 5. According to Table 2, it can be understood that Modificated Products 1 to 3 according to the present invention in which the hardness of the surface layer portion 3 μm below the surface is 810 Hv to 880 Hv (the hardness of the surface layer portion 5 μm below the surface is 780 Hv to 840 Hv), and the hardness of the surface layer portion 10 μm below the surface is 750 Hv to 780 Hv, have an anti-peeling property.

Further, according to Table 4, pitching to the mating member (cam) did not occur in any of the conventional product and Modificated Products 1 to 3 according to the present invention. As a result, it was proved that Modificated Products 1 to 3 according to the present invention is preferable in little aggressiveness to the mating member in addition to the anti-peeling property.

Moreover, the existence or nonexistence of occurrence of peeling was tested under the same conditions as Table 1 for Conventional Product 2 and Modificated Products 4 to 7 on which the surface modification was carried out by the same method as Modificated Products 1 to 3. The results are as shown in Table 5. Specifically, in the cases of Modificated Products 4 to 7 according to the present invention, on which soft shot-blasting or flow barrel processing was performed to Modificate the surface layer portion of the outer ring 5 by pressing hardening, occurrence of peeling was not observed. In contract, in Conventional Product 2 on which surface modification was not performed, occurrence and propagation of peeling was observed in the outer peripheral surface.

Table 5

| Specimen | Surface Hardness (Depth: 3 μm) |  | Evaluation Items of Anti-Peeling Property | Second Evaluation of Anti-Peeling Property |
|---|---|---|---|---|
| Conventional Product (Non-Modificated Product) | Average Hv 757 | Measurement Value (min -max) | Occurrence of Peeling in Outer peripheral Surface | Occurrence of Peeling and Development Wear in Outer Peripheral Surface |
|  |  | Hv 727 - 779 | Determined as "BAD" | Determined as "BAD" |

(continued)

| Specimen | Surface Hardness (Depth: 3 $\mu$m) | | Evaluation Items of Anti-Peeling Property | Second Evaluation of Anti-Peeling Property |
|---|---|---|---|---|
| Modificated Product 4 | Hv 829 | Hv 810 - 841 | No Occurrence of Damage and Wear Determined as "GOOD" | No Occurrence of Damage and Wear Determined as "GOOD" |
| Modificated Product 5 | Hv 848 | Hv 839 -858 | No Occurrence of Damage and Wear Determined as "GOOD" | No Occurrence of Damage and Wear Determined as "GOOD" |
| Modificated Product 6 | Hv 834 | Hv 792 - 890 | No Occurrence of Damage and Wear Determined as "GOOD" | No Occurrence of Damage and Wear Determined as "GOOD" |
| Modificated Product 7 | Hv 795 | Hv 780 - 811 | No Occurrence of Damage and Wear Determined as "GOOD" | No Occurrence of Damage and Wear Determined as "GOOD" |

Next, evaluation was performed about the surface roughness of the outer ring 5. In the outer ring 5 in which the surface roughness of a surface layer portion existing between the surface and a depth of at least 3 $\mu$m from the surface is Hv 780 to Hv 900, and the surface roughness of a surface layer portion existing at a depth of 10 $\mu$m or more from the surface is lower than the surface roughness of the above surface layer portion and less than Hv 780, aggressiveness to a mating member was tested using specimens whose surface roughness was changed. In addition, "SE-3400 Roughness Measuring Instrument" made by Kosaka Laboratory Ltd. was used for measurement of the surface roughness. The results are as shown in Table 6. According to this table, it can be estimated that, if the surface roughness Ra of a surface layer portion is 0.16 $\mu$ or more, a possibility is high that pitching is caused in a mating member, whereas if the surface roughness Ra is 0. 15 $\mu$ or less, a possibility is little that pitching is caused in a mating member.
Table 6

| Specimen | Surface Roughness Ra | Evaluation of Pitching to Mating Member |
|---|---|---|
| Specimen 1 | 0.22 | X |
| Specimen 2 | 0.20 | X |
| Specimen 3 | 0.19 | X |
| Specimen 4 | 0.16 | X |
| Specimen 5 | 0.15 | O |
| Specimen 6 | 0.10 | O |
| Specimen 7 | 0.06 | O |
| (O ... No Problem, X ... with Problem) | | |

Further, according to Modificated Products 1 to 2 in Tables 2 and 4 in which preferable results were obtained with respect to occurrence of peeling and aggressiveness to a mating member, it is considered that it is preferable that the hardness of an internal layer portion a depth of 10 $\mu$m or more from the surface be Hv 60 lower than the hardness of a surface layer portion from the surface to at least 3 $\mu$m below the surface. In order to support this, evaluation of an anti-peeling property and evaluation of a mating member were performed on Conventional Products 3 and 4 whose surface was subjected to hard shot-blasting, and Modificated Product 8 according to the present invention whose surface was subjected to soft shot-blasting. The results are shown as in Table 7. Specifically, in Conventional Products 3 and 4 in which a difference between the harndess of an internal layer portion to a depth of 10 $\mu$m or more from the surface and the hardness of a surface layer portion from its surface to 3 $\mu$m below the surface is Hv 25 and Hv 41, a problem occurred in terms of peeling to a mating member. In contrast, in the case of Modificated Product 8 according to the present invention in which the hardness difference is Hv 74, preferable results were obtained in terms of both the anti-peeling property and the pitching to a mating member.

Table 7

| | | Hv 0.1 | Hv 1 | Evaluation of Anti-Peeling Property | Evaluation of Pitching to Mating Member |
|---|---|---|---|---|---|
| Product Subjected to Hard Short-Blasting | Conventional Product 3 | 868 | 843 | O | X |
| | Conventional Product 4 | 854 | 813 | 0 | X |
| Inventive Product | Modificated Product 8 | 834 | 760 | O | O |
| (O ··· No Problem, X ··· with Problem) | | | | | |

With respect to a Modificated product according to the present invention, on which soft shot-blasting or flow barrel processing was performed to modificate a surface layer portion of an outer ring 5 by pressing hardening, the hardness of a surface layer portion existing between the surface and a depth of at least 3 $\mu$m from the surface is Hv 780 to Hv 900, and the hardness of an internal layer portion existing at a depth of 10 $\mu$m or more from the surface is lower than the above hardness and less than Hv 780, a maximum compressive residual stress in the surface of the surface layer portion and a maximum compressive residual stress in the layer existing between the surface and a depth of 10 $\mu$m from the surface were investigated.

The results are as shown in Tables 8 and 10. Specifically, combinations of the value of a maximum compressive residual stress in the surface of the surface layer portion of the outer ring 5 and the value of a maximum compressive residual stress in the layer existing at a depth of 10 $\mu$m from the surface were obtained, that is, combinations of 977 MPa and 259 MPa (Modificated Product 10), 803 MPa and 166 MPa (Modificated Product 11), and 1100 MPa and 300 MPa (Modificated Product 12) were obtained. It can be concluded from these combinations that it is desirable that the maximum compressive residual stress of the surface layer portion of the outer ring 5 be 800 Mpa or more. Moreover, it can be concluded that it is preferable that the maximum compressive residual stress of the surface layer portion existing at a depth of 10 $\mu$m or more from the surface be 300 Mpa or less.

Table 8

| | Measured Depth ($\mu$m) | Maximum Compressive Residual Stress (Mpa) |
|---|---|---|
| Modificated Product 10 of Present Invention | 0 | -977 |
| | 10 | -259 |
| | 20 | -156 |
| | 50 | -128 |
| | 80 | -119 |
| | 120 | -124 |

Table 9

|  | Measured Depth ($\mu$m) | Maximum Compressive Residual Stress (Mpa) |
| --- | --- | --- |
| Modificated Product 11 of Present Invention | 0 | -803 |
|  | 10 | -166 |
|  | 30 | -125 |
|  | 70 | -64 |
|  | 100 | -42 |
|  | 150 | -62 |
|  | 220 | -42 |

Table 10

|  | Measured Depth ($\mu$m) | Maximum Compressive Residual Stress (Mpa) |
| --- | --- | --- |
| Modificated Product 12 of Present Invention | 0 | -1100 |
|  | 10 | -300 |

In the meantime, although the cam follower into which the rolling bearing shown in Fig. 1 is incorporated is exemplified in Embodiment 1, the present invention can also be applied to a cam follower into which a slide bearing in which the outer ring 5 comes into a direct contact with the shaft 5 is incorporated.

Embodiment 2

Although the outer ring 5 of the cam follower is exemplified in Embodiment 1 as a rolling/sliding part with its surface modification, which is used in a state where the rolling/sliding part comes into sliding contact or rolling contact with a mating part, the present invention can also be applied to a rolling bearing. Fig. 2 is a partial sectional view of the roller bearing according to Embodiment 2 of the present invention. This roller bearing is obtained by arranging rolling elements 13 that are a plurality of cylindrical rollers between an inner ring 11 and an outer ring 12 that are bearing rings. In such a cylindrical roller bearing, it is possible to obtain a roller bearing capable of preventing occurrence of peeling and occurrence of pitching to a mating member by subjecting the inner ring 11 and the rolling elements 13 to the surface modificating as described in Embodiment 1.

Embodiment 3

The outer ring 5, the inner ring 11, and the rolling elements 13, and the like, which have the surface modificating characteristics as described above, are obtained by performing surface modificating on a surface layer portion of a base material to be a rolling/sliding part. Specifically, soft shot-blasting or flow barrel processing which has an effect on the hardness of only a surface layer portion existing at a depth of, at a maximum, 10 $\mu$m (preferably about 5 $\mu$m) from the surface of the base material is performed on the base material, and this processing is repeated until it is confirmed that, when Vickers hardness measurement is performed on the base material after the processing, the hardness A measured under a load of 0.1 N becomes Hv 780 to 900, and the hardness B measured under a load of 1 N becomes lower than the hardness A and less than Hv 780. Thereby, sliding parts having the surface modificating characteristics of Embodiment 1 can be obtained.

In the case of the Vickers hardness test, the depth t at the time of quadrangular pyramidal push-in can be calculated using the hardness Hv and test load F (N). That is, as shown in an explanatory view of the Vickers hardness measuring test of Fig. 3, the following relation is satisfied:

$$\mathrm{Tan}X = t/(d/2), \ (\text{where } X = (90 - (136/2)^\circ$$

From this relation, the relation shown in Table 10 can be obtained.
Table 11

| Hv | FN | D (mm) | t (mm) |
|---|---|---|---|
| 780 | 0.98 | 0.0154 | 0.0031 |
| 800 | 0.98 | 0.0152 | 0.0031 |
| 900 | 0.98 | 0.0143 | 0.0029 |
| 800 | 9.807 | 0.0481 | 0.0097 |
| 900 | 9.807 | 0.0454 | 0.0092 |
| 750 | 9.807 | 0.0497 | 0.0100 |

Referring to the relation of Table 11, it can be regarded that Hv measured under a load of 0.98 N at a Vickers hardness level of 780 to 900 represents Hv at a position existing at a depth of 3 $\mu$m (0.003 mm) from the surface, and Hv measured under a load of 0.98 N at a Vickers hardness level of 750 to 900 represents Hv at a position existing at a depth of 10 $\mu$m (0.01 mm) from the surface.
This relation is used in the above surface modificating method.
According to the above surface modificating method, since the soft shot-blasting is performed on only a surface layer portion of a base material to be a rolling/sliding part, it is possible to obtain rolling/sliding parts which make it unnecessary to perform additional processing for roughness removal after the soft shot-blasting and make it possible to avoid pitching to a mating member.

**Claims**

1. A rolling/sliding part used in a state where the rolling/sliding part comes into sliding contact or rolling contact with a mating part,
   wherein hardness of a surface layer portion existing between a surface thereof and 3 $\mu$m below the surface is Hv 780 to 900, and hardness of an internal surface portion existing at a depth of 10 $\mu$m or more from the surface is lower than the hardness of the surface layer portion and less than Hv 780.

2. The rolling/sliding part according to Claim 1, wherein the hardness of the internal surface portion is Hv 60 or more lower than the hardness of the surface layer portion.

3. The rolling/sliding part according to Claim 1, wherein maximum compressive residual stress of the surface layer portion is 800 MPa or more and maximum compressive residual stress of the internal layer portion is 300 MPa or less.

4. The rolling/sliding part according to Claim 1, wherein the roughness Ra of the surface of the surface layer portion is 0.15 $\mu$m or less.

5. A bearing comprising:

   a bearing ring constituted by the rolling/sliding part according to claim 1; and
   a rolling element contacting the bearing ring, the rolling element being constituted by the rolling/sliding part according to claim 1.

6. A cam follower comprising:

   a rotatable outer ring which comes into rolling contact with a cam, the outer ring being constituted by the rolling/ sliding part according to Claim 1.

7. A method of modifying a surface of a rolling/sliding part used in a state where the rolling/sliding part comes into sliding contact or rolling contact with a mating parts, the method comprising:

performing shot-blasting or barrel processing which has an effect on hardness of only a surface layer portion existing at a depth of, at a maximum, 10 $\mu$m from the surface of a base material to be the rolling/sliding part; and repeating the processing until it is confirmed that, when Vickers hardness measurement is performed on the base material after the processing, hardness A measured under a load of 0.1 N becomes Hv 780 to 900, and hardness B measured under a load of 1 N becomes lower than the hardness A and less than Hv 780.

*FIG. 1*

*FIG. 2*

*FIG. 3*

$$X = (90 - (136/2))°$$

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5288257 A
- JP 5288221 A
- JP 6129433 A
- JP 6129434 A
- JP 6042537 A